# EUROPÄISCHE PATENTSCHRIFT

(11) **EP 0 831 059 B1**
(45) Veröffentlichungstag und Bekanntmachung des Hinweises auf die Patenterteilung: **19.12.2001**
(21) Anmeldenummer: 97116358.9
(22) Anmeldetag: 19.09.1997
(51) Int. Cl.: C01B 33/12

(54) **Mesoporöses Siliciumdioxid, Verfahren zu seiner Herstellung und seine Verwendung**
Mesoporous silica, process for the preparation thereof and use thereof
Silice mésoporeuse, procédé de sa préparation et son utilisation

(30) Priorität: 23.09.1996 DE 19639016
(43) Veröffentlichungstag der Anmeldung: 25.03.1998
(73) Patentinhaber: BASF AKTIENGESELLSCHAFT, 67056 Ludwigshafen (DE)
(72) Erfinder: Müller, Ulrich, Dr., 67434 Neustadt (DE); Reck, Bernd, Dr., 67269 Grünstadt (DE); Roser, Joachim, Dr., 68165 Mannheim (DE)
(74) Vertreter: Isenbruck, Günter, Dr.

(56) Entgegenhaltungen:
- EP-A- 0 670 286
- WO-A-86/07345
- DE-A- 2 506 760
- DE-A- 2 841 364
- DE-B- 2 226 587
- US-A- 5 318 790
- DATABASE WPI Section Ch, Week 9530 Derwent Publications Ltd., London, GB; Class D15, AN 95-228497 XP002052186 & JP 07 138 013 A (NIPPON SILICA KOGYO KK) , 30.Mai 1995
- DATABASE WPI Section Ch, Week 9234 Derwent Publications Ltd., London, GB; Class E36, AN 92-281551 XP002052187 & JP 04 193 708 A (NIPPON STEEL CHEM CO) , 13.Juli 1992
- DATABASE WPI Section Ch, Week 9637 Derwent Publications Ltd., London, GB; Class D16, AN 96-3655564 XP002052196 & JP 08 173 137 A (FUJI SILYSIA CHEM LTD) , 9.Juli 1996
- PATENT ABSTRACTS OF JAPAN vol. 096, no. 006, 28.Juni 1996 & JP 08 034607 A (NIPPON CHEM IND CO LTD), 6.Februar 1996,
- DATABASE WPI Section Ch, Week 9318 Derwent Publications Ltd., London, GB; Class J01, AN 93-149008 XP002052189 & JP 05 085 762 A (KANSAI GIJUTSU KENKYUSHO KK) , 6.April 1993
- DATABASE WPI Section Ch, Week 9121 Derwent Publications Ltd., London, GB; Class A89, AN 91-153053 XP002052190 & JP 03 088 711 A (ASAHI GLASS CO LTD) , 15.April 1991

## Beschreibung

Die Erfindung betrifft mesoporöses Siliciumdioxid mit einer spezifischen Oberfläche der Mesoporen von mindestens 1000 m²/g und einem Porenvolumen der Mesoporen von mindestens 1,0 ml/g, und einem maximum der Porendurchmesserverteilung der Mesoporen von mindestens 8 nm. Zudem betrifft die Erfindung Verfahren zur Herstellung des mesoporösen Siliciumdioxides, seine Verwendung, sowie Formkörper und Katalysatoren daraus.

Die Herstellung von Kieselsäuren und Kieselgelen nach technischen Verfahren ist in Ullmann, Encyklopädie der technischen Chemie, 4. Auflage, 1982, Band 21, Seiten 457 - 463 beschrieben.

Es sind weitporige Kieselgele mit einem Porenvolumen von mehr als 0,8 ml/g, einer spezifischen Oberfläche von 200 - 400 m²/g und einem Porendurchmesser von 8 - 10 nm sowie engporige Kieselgele mit einem Porenvolumen von weniger als 0,5 ml/g, einer spezifischen Oberfläche von 600 - 800 m²/g und einem Porendurchmesser von 2 - 2,5 nm beschrieben.

Aus Nature, Band 359 (1992, Seiten 710 - 712) sind Alumosilicate mit großer Oberfläche und scharfer Porengrößenverteilung bekannt, die als MCM-41 bezeichnet werden. Für ein Alumosilicat mit einem Porendurchmesser von 4,5 nm wurden eine BET-Oberfläche von mehr als 1000 m²/g und ein Porenvolumen von 0,79 cm³/g gefunden. Weitere Alumosilicate mit Porengrößen von 3 nm und 4 nm sind erwähnt. Das Röntgendiffraktogramm zeigt charakteristische scharfe Banden im Bereich von 2θ = 2 - 4°. Zudem weisen die Alumosilicate eine Stufe in der Stickstoffadsorptionsisotherme im Bereich von p/p₀ = 0,2 - 0,4 auf. Die Alumosilicate werden synthetisiert unter Verwendung von Hexadecyltrimethylammoniumsalzen als kationische Tenside.

Weitere Verfahren zur Herstellung von mesoporösen Molekularsieben sind in der EP-A-0 670 286 beschrieben. Hierbei werden anionische Tenside und Isopoly- oder Heteropolykationen von bestimmten Metalloxiden, die von Siliciumdioxid verschieden sind, zur Synthese eingesetzt.

Nach der Synthese der wie vorstehend in Gegenwart von Tensiden hergestellten mesoporösen Oxide werden die Tenside thermisch entfernt, beispielsweise durch Verbrennen in Gegenwart von Sauerstoff. Bei der Herstellung der mesoporösen Oxide enthalten Vor- oder Zwischenstufen häufig bis zu ca. 30 - 60 Gew.-% an Tensiden, die nach der Synthese entfernt werden müssen. Die Tenside sind zum einen kostspielig, zum anderen ist ihre Entfernung aufwendig.

Zudem sind die Porendurchmesser der Mesoporen in der überwiegenden Zahl der Fälle auf den Bereich von 2 - 6 nm beschränkt. Für viele Anwendungen, beispielsweise als heterogene Katalysatoren, sind jedoch Oxide mit größeren Poren wünschenswert, um für schnelle Reaktionen einen guten Stofftransport zu gewährleisten. Bei Katalysatoren auf der Basis von Kieselgel werden derartige Porengrößen mitunter erreicht, die Porendurchmesser weisen jedoch dabei eine breite Verteilung auf und die spezifischen Oberflächen sind sehr gering.

Aufgabe der vorliegenden Erfindung ist die Bereitstellung von mesoporösen Oxidkörpern mit einem hohen Anteil an Mesoporen, die eine große spezifische Oberfläche und ein großes Porenvolumen sowie eine große mittlere Porengröße im Mesoporenbereich aufweisen.

Gelöst wird die Aufgabe durch die eingangs aufgeführten mesoporösen Siliciumdioxide. Zudem werden die Aufgaben gelöst durch ein Verfahren zur Herstellung vom mesoporösem Siliciumdioxid durch Umsetzung von Siliciumdioxidvorläufern in einem wasserhaltigen Reaktionsmedium, das eine Polymerisatdispersion eines durch radikalische Polymerisation erhältlichen Polymerisats enthält. Die Nachteile der eingangs beschriebenen bekannten Verfahren treten nicht auf.

Es wurde gefunden, daß mesoporöses Siliciumdioxid erhalten werden kann, wenn man Siliciumdioxidvorläufer in Gegenwart von Polymerisatdispersionen zu Siliciumdioxid umsetzt.

Die erhaltenen mesoporösen Siliciumdioxide weisen eine spezifische Oberfläche der Mesoporen von mindestens 1000 m²/g, insbesondere mindestens 1250 m²/g auf. Die spezifischen Oberflächen können im Bereich von 1000 - 2000, insbesondere 1250 - 1600 m²/g liegen. Das Porenvolumen der Mesoporen beträgt dabei mindestens 1,0, vorzugsweise mindestens 1,5, insbesondere mindestens 2 ml/g. Dabei kann das Porenvolumen 1,0 - 3,0, vorzugsweise 1,5 - 3,0, insbesondere 2,0 - 3,0 ml/g betragen. Unter "Mesoporen" versteht man dabei Poren mit einem Porendurchmesser im Bereich von 2 - 50 nm. Die Porendurchmesser und spezifischen Oberflächen der Mesoporen werden dabei gemessen durch Stickstoffadsorption bei 77 K. Die Porenoberfläche kann dabei unter Verwendung des BJH-Modells errechnet werden. Das Porenvolumen wird bei einem Relativdruck von p/p₀ = 0,98 bestimmt.

Vorzugsweise weisen die erfindungsgemäßen mesoporösen Siliciumdioxide ein Maximum der Porendurchmesserverteilung der Mesoporen von mindestens 8 nm auf. Die Porendurchmesserverteilung kann dabei wiederum durch Stickstoffadsorption bei 77 K bestimmt werden.

Der Hauptanteil der Mesoporen weist dabei vorzugsweise einen Durchmesser im Bereich von 2 - 50, besonders bevorzugt 4 - 30, insbesondere 6 - 20 nm auf. Der Hauptanteil bezieht sich dabei auf den Hauptanteil des Porenvolumens, wobei der Porendurchmesser durch Stickstoffadsorption bei 77 K bestimmt wird. Porengrößen, Porenvolumina und Oberflächen beziehen sich dabei auf calciniertes Siliciumdioxid.

Die erfindungsgemäßen mesoporösen Siliciumdioxide weisen vorzugsweise bei der Stickstoffadsorption keine charakteristische Stufe im Bereich von p/p₀ = 0,2 - 0,4 auf. Dies zeigt, daß eine sehr gute mesoporöse Struktur der Siliciumdioxide vorliegt.

Vorzugsweise weisen die erfindungsgemäßen mesoporösen Siliciumdioxide eine Stickstoffadsorptionsisotherme bei 77 K mit einem starken Anstieg oder einer Stufe im Bereich p/p₀ = 0,5 - 1,0, vorzugsweise 0,6 - 0,95 auf. Insbesondere zeigt dabei die Adsorptionskurve einen starken Anstieg im Bereich von p/p₀ = 0,8- 0,95, die Desorptionskurve einen starken Anstieg im Bereich von p/p₀ = 0,6 - 0,8. Vorzugsweise weisen sowohl Adsorptionskurve als auch Desorptionskurve nur jeweils eine Stufe oder einen starken Anstieg auf.

Bei den Röntgendiffraktogrammen wurde mit Cu-Kα-Strahlung mit einer Wellenlänge von 0,15406 nm gearbeitet.

Das Röntgendiffraktogramm der erfindungsgemäßen mesoporösen Siliciumdioxide weist im Bereich 2θ > 4°,insbesondere im Bereich 2θ = 2 - 4° keine scharfen Signale auf. Zudem weist das Diffraktogramm keine scharfen Signale oder Reflexe im Bereich 2θ = 20 - 25° auf. Vorzugsweise zeigt das Röntgendiffraktogramm einen starken Anstieg der Linienintensität im Bereich 2θ < 6°, insbesondere 2θ < 4° auf. Der größte Flächenteil des Röntgendiffraktogramms liegt im Bereich 2θ < 6°.

Die erfindungsgemäßen mesoporösen Siliciumdioxide können durch Umsetzung von Siliciumdioxidvorläufern in einem wasserhaltigen Reaktionsmedium, das eine Polymerisatdispersion enthält hergestellt werden. Die so hergestellten Siliciumdioxide werden vorzugsweise calciniert.

In der Polymerisatdispersion kann jedes durch radikalische Polymerisation erhältliche Polymerisat eingesetzt werden. Im allgemeinen wird es sich um ein durch Emulsionspolymerisation erhaltenes Polymerisat handeln. In gleicher Weise können jedoch auch Polymerisate eingesetzt werden, welche durch eine andere Polymerisationsart, beispielsweise durch Suspensionspolymerisation, erhältlich sind. Vorzugsweise wird das Polymerisat in Form einer Dispersion eingesetzt, die insbesondere einen Polymerisatgehalt im Bereich von 40 bis 80 Gew.-%, insbesondere 50 bis 75 Gew.-%, aufweist. Es kann sich dabei um eine Primärdispersion handeln, d.h. um eine Dispersion, so wie sie bei der Emulsionspolymerisation anfällt, oder um eine Sekundärdispersion, d.h. um eine Dispersion, die durch nachträgliches Dispergieren eines bereits isolierten Polymerisates im Dispersionsmedium erhalten worden ist.

Beim Dispersionsmedium handelt es sich in der Regel um Wasser. Es können jedoch auch mit Wasser mischbare organische Lösungsmittel, wie Alkohole und Ketone, beispielsweise Methanol, Ethanol, n-Propanol, Isopropanol, n-Butanol, Aceton oder Methylethylketon, enthalten sein. Bevorzugt werden die Polymerisate durch radikalische Polymerisation von α,β-ethylenisch ungesättigten Monomeren hergestellt.

### Geeignete Monomere sind z.B.:

α,β-ethylenisch ungesättigte Mono- und Dicarbonsäuren, insbesondere solche mit 3 bis 6 Kohlenstoffatomen. Beispiele hierfür sind Acrylsäure, Methacrylsäure, Crotonsäure, Fumarsäure, Maleinsäure, 2-Methylmaleinsäure oder Itaconsäure sowie Halbester von ethylenisch ungesättigten Dicarbonsäuren, wie Maleinsäuremonoalkylester von C₁-C₈-Alkanolen;

### Vinylaromatische Verbindungen wie Styrol, α-Methylstyrol und Vinyltoluole;

Lineare 1-Olefine, verzweigtkettige 1-Olefine oder cyclische Olefine, wie z.B. Ethen, Propen, Buten, Isobuten, Penten, Cyclopenten, Hexen, Cyclohexen, Octen, 2,4,4-Trimethyl-1-penten, C₈-C₁₀-Olefin, 1-Dodecen, C₁₂-C₁₄-Olefin, Octadecen, 1-Eicosen (C₂₀), C₂₀-C₂₄-Olefin, metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem α-Olefin-Anteil, wie z.B. Polyisobuten;

### Butadien;

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann, wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen;

Acrylamide und alkylsubstituierte Acrylamide, wie z.B. Acrylamid, Methacrylamid, N-tert.-Butylacrylamid, N-Methyl-(meth)acrylamid;

Sulfogruppenhaltige Monomere, wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen;

C₁- bis C₈-Alkylester oder C₁ bis C₄-Hydroxyalkylester von C₃- bis C₆-Mono- oder Dicarbonsäuren (siehe oben), insbesondere der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit den erwähnten Säuren, wie z.B. Methyl(meth)acrylat, Ethyl(meth)acrylat, Propyl(meth)acrylat, Isopropyl(meth)acrylat, Butyl(meth)acrylat, Hexyl(meth)acrylat, 2-Ethylhexyl(meth)acrylat, Hydroxyethyl(meth)acrylat, Hydroxypropyl(meth)acrylat, Butindiol-1,4-monoacrylat, Maleinsäuredibutylester, Ethyldiglykolacrylat, Methylpolyglykolacrylat (11 EO), (Meth)acrylsäureester von mit 3, 5, 7, 10 oder 30 Mol Ethylenoxid umgesetztem C₁₃/C₁₅-Oxoalkohol bzw. deren Mischungen;

Alkylaminoalkyl(meth)acrylate oder Alkylaminoalkyl(meth)acrylamide, wie z.B. 2-(N,N-Dimethylamino)ethyl(meth)acrylat, 3-(N,N-Dimethyl-amino)-propyl(meth)acrylat, 2-(N,N,N-Trimethylammonium)ethyl(meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid, sowie deren Quaternisierungsprodukte z.B. mit Dimethylsulfat, Diethylsulfat oder anderen Alkylierungsagenzien, Vinyl- und Allylester von C₁- bis C₃₀-Monocarbonsäuren, wie z.B. Vinylformiat, Vinyl-2-ethylhexanoat, Vinylnonanoat, Vinyldecanoat, Vinylpivalat, Vinylpalmitat, Vinylstearat, Vinyllaurat.

Als weitere Monomere seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon. Quaternisierungsprodukte der genannten N-Vinylimidazol-Monomeren mit Dimethylsulfat, Diethylsulfat oder anderen Alkylierungsagenzien.

Bevorzugte weitere Monomere sind die erwähnten Ester der Acrylsäure und Methacrylsäure, die vinylaromatischen Verbindungen, Butadien, Vinylester, (Meth)acrylnitril und die erwähnten (Meth)acrylamide.

Besonders bevorzugte Comonomere sind Methacrylat, Ethylacrylate, Butylacrylate, 2-Ethylhexylacrylat, Methylmethacrylat, Butylmethacrylate, Hydroxyethylacrylate, Hydroxypropylacrylat, Hydroxybutylacrylate, Hydroxyethylmethacrylat, Styrol, Butadien, Vinylacetat, Acrylnitril, Methacrylnitril, Acrylamid, Methacrylamid und/oder N-Butylacrylamid.

Die Polymerisate können nach üblichen Polymerisationsverfahren hergestellt werden, z.B. durch radikalische Substanz-, Emulsions-, Suspensions-, Dispersions-, Lösungs- und Fällungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Emulsions-, Fällungs- oder Suspensionspoymerisation gearbeitet. Besondere bevorzugt ist die Methode der radikalischen Emulsionspolymerisation im wäßrigen Medium.

Bei Anwendung der wäßrigen Emulsionspolymerisation erhält man Polymerisate mit einem gewichsmittleren Molekulargewicht von 1000 bis 2 000 000, vorzugsweise 5000 bis 500 000. Die K-Werte liegen im allgemeinen im Bereich von 15 bis 150 (1 gew.-%ig in Dimethylformamid). Die mittlere Teilchengröße (bestimmt mittels Lichtstreuung (Autosizer)) liegt im Bereich von 20 bis 1000 nm, bevorzugt 30 bis 700 nm, besonders bevorzugt 40 bis 400 nm. Die Dispersion kann eine monomodale oder polymodale Teilchengrößenverteilung aufweisen. Die Emulsionspolymerisation kann so durchgeführt werden, daß der Feststoffvolumengehalt im Bereich von 10 bis 70 %, vorzugsweise 20 bis 60 % liegt.

Die Polymerisation wird vorzugsweise in Gegenwart von Radikale bildenden Verbindungen (Initiatoren) durchgeführt. Man benötigt von diesen Verbindungen vorzugsweise 0,05 bis 15, besonders bevorzugt 0,2 bis 8 Gew.-%, bezogen auf die bei der Polymerisation eingesetzten Monomeren.

Geeignete Polymerisationsinitiatoren sind beispielsweise Peroxide, Hydroperoxide, Peroxodisulfate, Percarbonate, Peroxoester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-butylperoxid, Acetylacetonperoxid, tert.-Butylhydroperoxid, Cumolhydroperoxid, tert.-Butylperneodecanoat, tert.-Amylperpivalat, tert.-Butylperpivalat, tert. -Butylperneohexanoat, tert. -Butylper-2-ethylhexanoat, tert.-Butyl-perbenzoat, Lithium-, Natrium-, Kalium- und Ammoniumperoxodisulfat, Azodiisobutyronitril, 2,2'-Azobis(2-amidinopropan)dihydrochlorid, 2-(Carbamoylazo)isobutyronitril und 4,4-Azobis(4-cyanovaleriansäure). Auch die bekannten Redox-Initiatorsysteme können als Polymerisationsinitiatoren verwendet werden.

Die Initiatoren können allein oder in Mischung untereinander angewendet werden, z.B. Mischungen aus Wasserstoffperoxid und Natriumperoxodisulfat. Für die Polymerisation in wäßrigem Medium werden bevorzugt wasserlösliche Initiatoren eingesetzt.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C1- bis C₄-Aldehyde, wie Formaldehyd, Acetaldehyd, Propionaldehyd, Hydroxylammoniumsalze wie Hydroxylammoniumsulfät, Ameisensäure, Natriumbisulfit oder Isopropanol. Die Polymerisationsregler werden im allgemeinen in Mengen von 0,1 bis 10 Gew.-%, bezogen auf die Monomeren eingesetzt.

Um höhermolekulare oder vernetzte Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Neopentylglykoldimethacrylat, 3-Methylpentandioldiacrylat und 3-Methylpentandioldimethacrylat. Auch die Acrylsäure und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9 000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat. Allylmethacrylat, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomere® der Th. Goldschmidt AG). Die Vernetzer werden vorzugsweise in Mengen von 0,05 bis 50 Gew.-%, bevorzugt 0,1 bis 20 Gew.-%, insbesondere 0,5 bis 10 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Bevorzugt sind anionische Emulgatoren, beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden z.B. verwendet: quaternisierte Aminoalkoxylate, Alkylbetaine, Alkylamidobetaine und Sulfobetaine. Geeignet sind auch langkettige quartäre Amine, wie mit Dimethylsulfat quaternierte Fettamine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylamin, Polyvinylformamid, Polyvinylimidazol, Polyvinylsuccinimid, Polyvinyl-2-methylsuccinimid, Polyvinyl-1,3-oxazolidon-2, Polyvinyl-2-methylimidazolin sowie Acrylsäure, Methacrylsäure, Maleinsäure bzw. Maleinsäureanhydrid enthaltende Copolymerisate. Die Emulgatoren oder Schutzkolloide werden üblicherweise in Konzentrationen von 0,05 bis 20 Gew.-%, bezogen auf die Monomere, eingesetzt.

Wird in wäßriger Emulsion oder Verdünnung polymerisiert, so können die Monomere und Emulgatoren vor oder während der Polymerisation ganz oder teilweise durch übliche, anorganische oder organische Basen bzw. Säuren neutralisiert werden. Geeignete Basen sind z.B. Alkali- oder Erdalkaliverbindungen, wie Natrium-, Kalium- oder Calciumhydroxid, Natriumcarbonat, Ammoniak und primäre, sekundäre oder tertiäre Amine, wie Di- oder Triethanolamin. Geeignete Säuren sind z.B. Salzsäure, Schwefelsäure, Phosphorsäure, Ameisensäure und Essigsäure.

Besonders bevorzugt werden kationische wäßrige Polymerisatdispersionen verwendet, die mit kationischen Emulgatoren und/oder kationischen Hilfsmonomeren (Emulgatoren bzw. α,β-ethylenisch ungesättigte Monomere, die quartäre Amin- oder Ammoniumstrukturen enthalten) stabilisiert sind. Bevorzugt werden diese Emulsionspolymerisate mit kationische Gruppen enthaltenden Radikalbildern hergestellt.

Besonders bevorzugte Monomere sind Methylmethacrylat, Styrol, n-Butylacrylat, Butandioldiacrylat und mit Diethylsulfat quaterniertes N,N-Dimethylaminoethylmethycrylat. Vorzugsweise enthält die Polymerisatdispersion Polymerisate mit Grundbausteinen aus Methylmethacrylat, Butandioldiacrylat, und/oder mit Diethylsulfat quaternisiertem Dimethylaminoethylmethacrylat.

Die Durchführung der Polymerisation kann in üblicher Weise nach einer Vielzahl von Varianten kontinuierlich oder diskontinuierlich erfolgen. Wird das Polymerisat nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Das Polymerisat kann dabei beispielsweise ein Kautschuk sein, wie ein Epichlorhydrin-Kautschuk, Ethylen-Vinylacetat-Kautschuk, Polyethylenchlorsulfonkautschuk, Siliconkautschuk, Polyetherkautschuk, Dienkautschuk, wie Butadienkautschuk, Acrylatkautschuk, Ethylen-Propylenkautschuk, Ethylen-Propylen-Dien-Kautschuk, Butylkautschuk oder ein ähnlicher Kautschuk.

Im Falle von Sekundärdispersionen können auch nicht über radikalische Polymerisation hergestellte Polymerisate wie Polysiloxane, Polyurethane und Polyester verwendet werden.

Die Glastemperatur der erfindungsgemäßen Polymerisatdispersionen (gemessen im getrockneten Zustand mittels DSC) liegt zwischen -50°C und +150°C, bevorzugt zwischen 0 und 110°C.

Die Konzentration des Polymerisats im Reaktionsmedium beträgt vorzugsweise 0,05 - 20, besonders bevorzugt 0,25 - 10, insbesondere 0,5 - 10, speziell 0,5 - 5 Gew.-%, bezogen auf das gesamte Reaktionsgemisch. Besonders bevorzugt liegt dabei die Polymerisatdispersion in einem Zweiphasen-Reaktionsmedium in der wasserhaltigen oder wäßrigen Phase vor.

Als Reaktionsmedium kann jedes geeignete wasserhaltige Reaktionsmedium verwendet werden. Beispielsweise kann in Wasser als Reaktionsmedium gearbeitet werden. Darüber hinaus kann ein Gemisch von Wasser mit einem wasserlöslichen organischen Lösungshilfsmittel, wie einem niederen Alkohol, wie Ethanol oder Isopropanol, eingesetzt werden. Die Umsetzung kann auch in einem zweiphasigen Reaktionsmedium erfolgen, das aus einer wäßrigen Phase und einer organischen, nicht oder nur wenig mit Wasser mischbaren Phase besteht. Die organische Phase sollte dabei in bezug auf die Reaktion inert sein. Das wasserhaltige Reaktionsmedium bzw. das Zweiphasengemisch kann während der Umsetzung bewegt, insbesondere gerührt werden, es kann jedoch auch eine Umsetzung in der nicht bewegten Phase, insbesondere an der Phasengrenze eines zweiphasigen Systems erfolgen. Führt man die Reaktion an einer ruhenden Grenzfläche durch, so kann das mesoporöse Siliciumdioxid in Form dünner Filme oder Schichten erhalten werden. Die so erhaltenen Oxidfilme oder Oxidschichten können Anwendung finden in Membran-, Trenn- und Reinigungsverfahren oder auch in Anwendungen zur Informationsspeicherung. Entsprechende Filme oder Schichten können zudem für elektronische, optische oder elektrooptische Anwendungen geeignet sein. Die Membranen können weiterhin für katalytische Umsetzungen in Membranreaktoren oder bei Reaktivdestillationen eingesetzt werden.

Als Siliciumdioxidvorläufer können alle geeigneten Verbindungen eingesetzt werden, die durch eine physikalische oder chemische Behandlung Siliciumdioxid ergeben. Beispiele sind organische Siliciumverbindungen, insbesondere hydrolysierbare organische Siliciumverbindungen, wie Alkoholate oder Chelate. Zudem kann der Siliciumdioxidvorläufer in Form eines löslichen Salzes oder Kolloids eingesetzt werden, wie auch in Form von Wasserglas oder pyrogener Kiesessäure.

Vorzugsweise werden organische Siliciumverbindungen in Form von Tetraalkoholaten, wie Tetramethoxysilicium oder Tetraethoxysilicium eingesetzt. Dabei kann die Siliciumtetraalkoxyverbindung, insbesondere C₁₋₄-Alkoxyverbindung im organischen Lösungsmittel vorgelegt werden und an der Phasengrenze in einem zweiphasigen Reaktionsmedium umgesetzt werden. An der Phasengrenze der nichtmischbaren Phasen bildet sich dabei das mesoporöse Siliciumdioxid. Beim Mischen des Reaktionsmediums, insbesondere beim Rühren des Reaktionsmediums bildet sich dabei eine Emulsion entweder des organischen Lösungsmittels im Wasser oder von Wasser im organischen Lösungsmittel. Durch Variation der Mischintensität bzw. der Rührergeschwindigkeit beim mechanischen Rühren kann dabei die Art und Größe der entstehenden Siliciumdioxidteilchen bestimmt werden, so daß Formkörper aus Siliciumdioxid zugänglich werden. Führt man einen Träger in den Bereich der Grenzschicht zwischen zwei unterschiedlichen Phasen als Reaktionsmedium ein, so kann eine Abscheidung des mesoporösen Siliciumdioxids auf diesem Träger erfolgen. Beispielsweise kann der Träger ein inerter poröser Träger sein, wie ein poröses Glas, Aluminiumoxid, Kieselgel oder Tonerde, Keramik, Metall oder eine Metallpackung, wie sie beispielsweise für statische Mischer eingesetzt wird. Dieser inerte Träger kann somit mit dem mesoporösen Siliciumdioxid belegt oder imprägniert werden, wodurch Komposit-Materialien entstehen, die eine gute mechanische Stabilität aufweisen, insbesondere im Vergleich zu trägerfreien mesoporösen Oxidformkörpern.

Die Herstellung von Formkörpern aus dem erfindungsgemäßen mesoporösen Siliciumdioxid kann auch nach der Umsetzung erfolgen. Dabei wird bei der Umsetzung erhaltenes mesoporöses Siliciumdioxid, insbesondere in Pulverform, durch geeignete Maßnahmen in die Form des gewünschten Formkörpers gebracht. Geeignete Verfahren sind bekannt, beispielsweise kann das mesoporöse Siliciumdioxid mit einem Bindemittel gemischt werden und zu Tabletten verpreßt werden. Auch eine Formgebung durch Extrusion ist möglich.

Das Reaktionsmedium kann weitere Zusätze enthalten, wie beispielsweise Metall- oder Edelmetallionen. Geeignet sind beispielsweise Ionen der Elemente Al, B, Ge, der Gruppen IIIa, IIb, IVb, Vb, VIb des Periodensystems der Elemente, Be, Sn, Pb, Bi, Cu, Fe, Co, Ni, Ce, Mn oder deren Gemische. Bei zweiphasigen Reaktionsmedien können die Metallionen in einer der beiden Phasen oder in beiden Phasen vorliegen. Dadurch ist es möglich, katalytisch wirksame Metalle in das mesoporöse Siliciumdioxid bzw. daraus hergestellte Formkörper einzubringen, etwa bei Anwendungen als Katalysator. Es können ebenso beispielsweise für biotechnologische Anwendungen Enzyme in das wasserhaltige Reaktionsmedium bzw. die wäßrige Phase eines zweiphasigen Reaktionsmediums eingebracht werden, die dann miteinkondensiert werden. Auch der Einschluß von pharmakologisch aktiven Stoffen, wie pharmazeutischen Wirkstoffen ist aufgrund der milden Reaktionsbedingungen möglich. Somit können mesoporöse Siliciumdioxide oder entsprechende Formkörper hergestellt werden, die einen pharmazeutischen Wirkstoff bei einer bestimmten Applikation retardiert freisetzen.

Weiterhin können Pigmente das Reaktionsmedium eingebracht werden, die dann im mesoporösen Siliciumdioxid oder Formkörper daraus vorliegen. Somit ist es möglich, eingefärbtes Siliciumdioxid oder Formkörper daraus herzustellen.

Die Umsetzung erfolgt vorzugsweise bei einer Temperatur im Bereich von -10 bis +150°C, vorzugsweise 10 - 90°C besonders bevorzugt 20 - 65°C. Die Umsetzung kann bei Atmosphärendruck, Unterdruck oder Überdruck ausgeführt werden, wie bei einem Druck im Bereich von 0,4 - 300 bar. Vorzugsweise wird die Umsetzung bei Atmosphärendruck ausgeführt.

Das erfindungsgemäße Verfahren kann sowohl im basischen als auch im sauren oder neutralen pH-Bereich durchgeführt werden. Vorzugsweise wird in einem sauren pH-Bereich gearbeitet, insbesondere von pH = 5 bis pH = 1.

Die nach der Umsetzung erhaltenen mesoporösen Siliciumdioxide oder daraus hergestellte Formkörper können erfindungsgemäß calciniert werden, beispielsweise um sie als Katalysatoren oder Katalysatorträger einzusetzen. Die Calcinierung erfolgt dabei erfindungsgemäß vorzugsweise bei einer Temperatur im Bereich von 300 - 600°C, vorzugsweise 400 - 450°C. Der Zeitraum für die Calcinierung kann 0,5 - 20 Stunden, vorzugsweise 2 - 8 Stunden betragen. Falls erforderlich, kann vor der Calcinierung ein Trockenschritt eingefügt werden, um ein trockenes Siliciumdioxid zu erhalten. Die erfindungsgemäß zur Calcinierung eingesetzten mesoporösen Siliciumdioxide weisen nur einen geringen Anteil an Polymerisat aus der Polymerisatdispersion auf. Vorzugsweise beträgt der Anteil an Polymerisatdispersion im getrockneten Siliciumdioxid vor dem Calcinieren 5 bis 200, besonders bevorzugt von 30 bis 150 Gew.-%, bezogen auf die Gesamtmasse an Siliciumdioxid und Polymerisat.

Die erfindungsgemäßen mesoporösen Siliciumdioxide bzw. daraus oder damit hergestellten oder damit beschichteten Formkörper können in einer Vielzahl von Anwendungen eingesetzt werden. Die bei der Synthese in einem unbewegten zweiphasigen Reaktionsmedium entstehenden Oxidfilme oder Schichten können als selbsttragende Membranen verwendet werden, wie bereits vorstehend erwähnt.

Zudem können das mesoporöse Siliciumdioxid oder daraus hergestellte Formkörper als Katalysatoren oder Katalysatorträger verwendet werden. Die Katalysatoren enthalten dabei das erfindungsgemäße mesoporöse Siliciumdioxid als Träger oder als aktive Substanz. Beispiele geeigneter katalytischer Umsetzungen sind dabei die Oxifunktionalisierung von Kohlenwasserstoffen, die Oxidation von Olefinen zu Oxiranen, Aromatenalkylierungen, Hydrierungen, Dehydrierungen, Hydratisierungen, Dehydratisierungen, Isomerisierungen, Additions- und Eliminierungsreaktionen, nucleophile und elektrophile Substitutionsreaktionen, Dehydrocyclisierungen, Hydroxylierungen von Heteroatomen und Aromaten, Epoxid-Aldehyd-Umlagerungen, Aminierungen von monomeren und oligomeren Olefinen, Kondensationsreaktionen vom Aldoltyp, Polymerisationsreaktionen, Veresterungen und Veretherungsreaktionen, wie auch katalytische Umsetzungen von Abgasen und Rauchgasen bzw. Stickoxidentfernung. Die Verwendung zur Aufnahme und verzögerten Freisetzung von Arzneimitteln wie auch zur Aufnahme von Pigmenten, die dann in dem mesoporösen Oxidformkörper beispielsweise verkapselt vorliegen, ist bereits vorstehend beschrieben. Auch eine Verwendung als Sorbentien sowie zur Herstellung von Oxidkeramiken oder Verwendung bei der Stofftrennung ist möglich. Die Oberflächenbeschaffenheit der erfindungsgemäßen mesoporösen Siliciumdioxide oder Formkörper daraus kann dabei durch die Art der verwendeten Dispersion gesteuert werden. Die Dispersion kann dabei als eine Art Stempel oder Form für die erhaltene Oberflächenstruktur dienen.

Die Erfindung wird nachstehend anhand eines Beispiels und einer Zeichung erläutert, in der
- Figur 1: eine transmissionselektronenmikroskopische Aufnahme des erfindungsgemäßen mesoporösen Siliciumdioxids zeigt, wie es gemäß dem Beispiel erhalten wird,
- Figur 2: eine Stickstoffadsorptionsisotherme für das mesoporöse Siliciumdioxid aus dem Beispiel und
- Figur 3: ein Röntgendiffraktogramm für das mesoporöse Siliciumdioxid aus dem Beispiel zeigt.

### Beispiel

In einem 21 fassenden Vierhalskolben wurden 84 g Tetraethoxysilan (Fa. Merck), 120 g Ethanol und 24,4 g Isopropanol unter Rühren gemischt. Zu dieser Mischung wurde eine Mischung aus 20 g der nachstehenden Polymerdispersion in 260 g deionisiertem Wasser zugetropft. Die entstehende weiße Suspension wurde für 20 Stunden bei Raumtemperatur gerührt. Anschließend wurde abfiltriert, der Filterkuchen mit Wasser gewaschen und an Luft bei Raumtemperatur und sodann für 16 Stunden bei 60°C getrocknet. Das getrocknete Material wurde sodann für 5 Stunden bei 500°C an Luft calciniert. Dabei wurden 1,9 g calciniertes Produkt erhalten.

### Herstellung der Polymerdispersion

In einem 31 Polymerisationsgefäß aus Glas, versehen mit einem Ankerrührer wurden 84,3 g Wasser und 100 g Lipamin® OK (Fa. BASF, 40%ige wäßrige Emulgatorlösung) vorgelegt und auf 80°C erwärmt. Nach Spülung der Apparatur mit Stickstoff wurden bei 80°C innerhalb von 3h ein Zulauf 1 und innerhalb von 3,5h ein Zulauf 2 räumlich getrennt kontinuierlich dem Polymerisationsgefäß unter Rühren mit 120 Upm zugeführt. Anschließend wurde noch 0,5h bei 80°C nachpolymerisiert und dann abgekühlt.

| | | |
|---|---|---|
| Zulauf 1 | 871 g | Wasser |
| | 100 g | Lipamin OK (Fa. BASF, 40%ige wäßrige Emulgatorlösung) |
| | 720 g | Methylmethacrylat |
| | 40 g | 1,4-Butandioldiacrylat |
| | 80 g | einer 50%igen wäßrigen Lösung von N,N-Dimethylaminoethylmethacrylat quaterniert mit Diethylsulfat |
| Zulauf 2 | 150 g | Wasser |
| | 8 g | Azostarter V 50 (Fa. Wako Chemicals GmbH) |

Es wurde eine Polymerdispersion erhalten, die einen Festoffgehalt von 30,1%, einen LD-Wert von 78 und einen pH-Wert von 6,4 aufwies. Die Teilchengröße, bestimmt mit einem Autosizer der Fa. Malvern, betrug 232 nm.

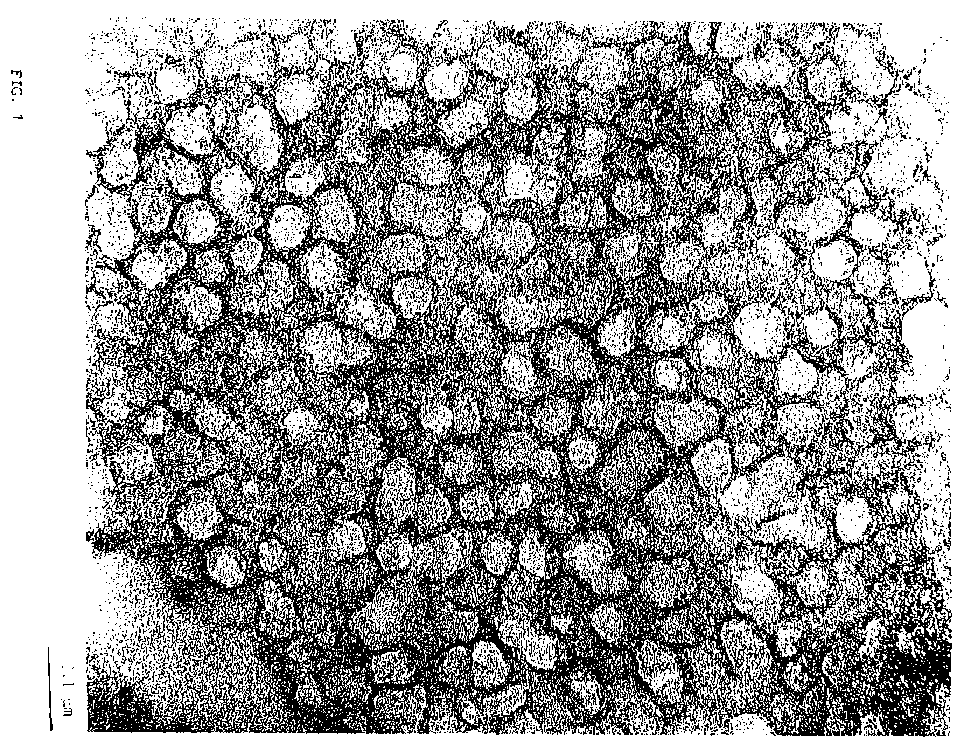

Die transmissionselektronenmikroskopische Aufnahme in Figur 1 zeigt eine regelmäßige Strukturierung des entstandenen Siliciumdioxids mit Inseln von 50 - 100 nm Durchmesser.

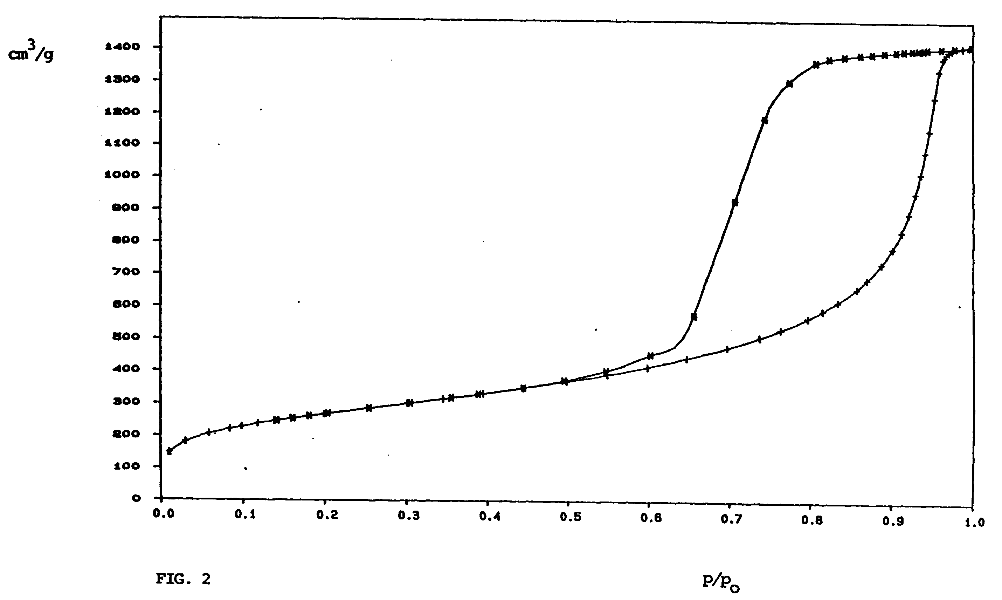

Mittels Stickstoffadsorption bei 77 K wurde die in Figur 2 dargestellte Adsorptionskurve gemessen. Die mit Kreuzen markierte Kurve gibt die Adsorption wieder, die mit Sternchen markierte Kurve die Desorption. Man erhält eine typische Hysterese im Relativdruckbereich von p/p₀ > 0,6. Unter Verwendung des BJH-Modells bestimmt sich daraus für die Poren im Porendurchmesserbereich von 1,7 - 30 nm eine Oberfläche von 1310 m²/g. Das entsprechende Porenvolumen beträgt 2,18 ml/g, gemessen bei einem Relativdruck von p/p₀ = 0,98. Der häufigste Porendurchmesser beträgt ca. 8 nm.

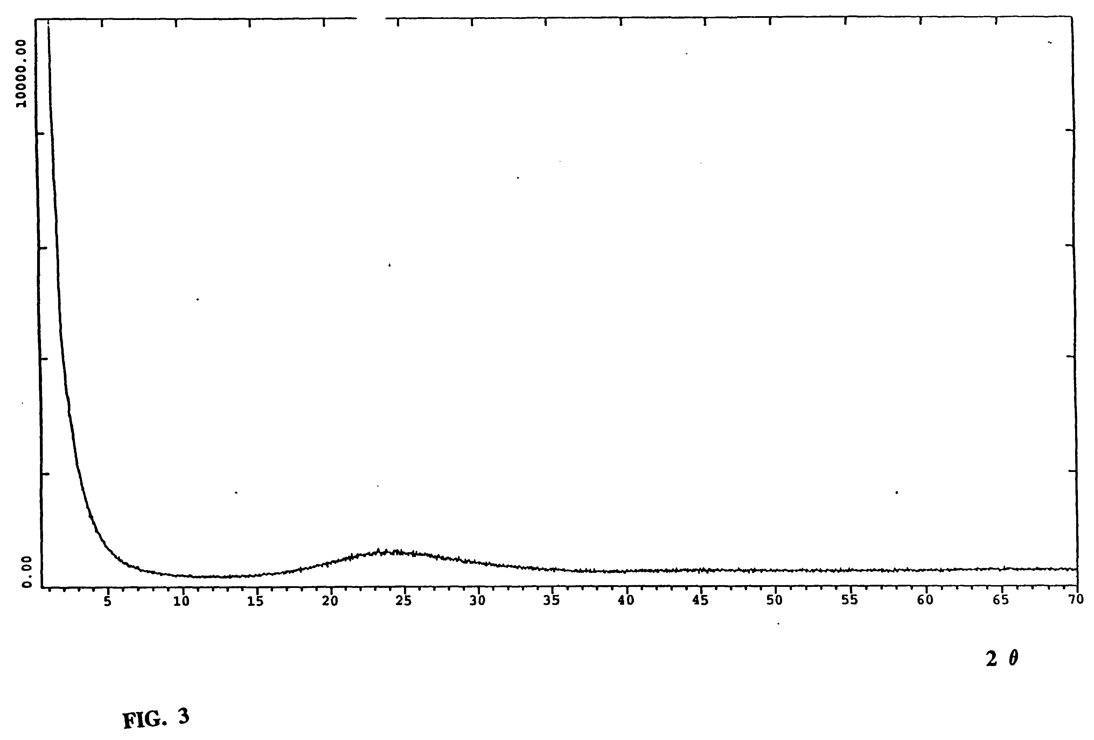

Zudem wurde ein Röntgendiffraktogramm gemessen mit Cu-Kα-Strahlung der Wellenlänge 0,15406 nm. Das Diffraktogramm ist in Figur 3 dargestellt. Im Diffraktogramm sind keine scharfen Signale bei Winkelwerten 2θ > 4° erkennbar, jedoch ein starker Streubeitrag bei Winkelwerten 2θ < 4°.

## Patentansprüche

1. Mesoporöses Siliciumdioxid mit einer spezifischen Oberfläche der Mesoporen von mindestens 1000 m²/g, einem Porenvolumen der Mesoporen von mindestens 1,0 ml/g und einem Maximum der Porendurchmesserverteilung der Mesoporen von mindestens 8 nm.

2. Mesoporöses Siliciumdioxid nach Anspruch 1 mit einem Porenvolumen der Mesoporen von mindestens 1,5 ml/g.

3. Verfahren zur Herstellung von mesoporösem Siliciumdioxid durch Umsetzung von Siliciumdioxidvorläufern in einem wasserhaltigen Reaktionsmedium, **dadurch gekennzeichnet, daß** das Reaktionsmedium eine Polymerisatdispersion eines durch radikalische Polymerisation erhältlichen Polymerisats enthält.

4. Verfahren nach Anspruch 3, **dadurch gekennzeichnet, daß** die Polymerisatdispersion kationisch ist.

5. Verfahren nach Anspruch 3 oder 4, **dadurch gekennzeichnet, daß** der Siliciumdioxidvorläufer in Form einer organischen Siliciumverbindung, eines Siliciumsalzes, in Form von Wasserglas oder pyrogener Kieselsäure eingesetzt wird.

6. Mesoporöses Siliciumdioxid nach einem der Ansprüche 1 oder 2, **dadurch gekennzeichnet, daß** es zusätzlich noch mindestens ein Element, ausgewählt aus A1, B, Ge, Elementen der Gruppen IIIa, IIb, IVb, Vb, VIb des Periodensystems der Elemente, Be, SN, Pb, Bi, Cu, Fe, Co, Mi, Ce, Mn, pharmokologisch wirksame Stoffe, Enzyme, Pigmente oder Gemische daraus enthält.

7. Verwendung von mesoporösem Siliciumdioxid nach einem der Ansprüche 1 oder 2 zur Herstellung von Formkörpern, als Katalysator oder Träger für Katalysatoren oder pharmakologisch wirksame Stoffe, Enzyme oder Pigmente.

8. Formkörper, beschichtet mit oder bestehend aus einem mesoporösen Siliciumdioxid nach einem der Ansprüche 1, 2 oder 6.

9. Katalysator, enthaltend mesoporöses Siliciumdioxid nach einem der Ansprüche 1, 2 oder 6 als Träger oder aktive Substanz.

## Claims

1. A mesoporous silica having a specific surface area of the mesopores of at least 1000 m²/g, a volume of the mesopores of at least 1.0 ml/g and a maximum of the diameter distribution of the mesopores of at least 8 nm

2. A mesoporous silica as claimed in claim 1, having a volume of the mesopores of at least 1.5 ml/g.

3. A process for the preparation of mesoporous silica by converting a silica precursor in a water-containing reaction medium, wherein the reaction medium contains a polymer dispersion of a polymer obtainable by free radical polymerization.

4. A process as claimed in claim 3, wherein the polymer dispersion is cationic.

5. A process as claimed in claim 3 or 4, wherein the silica precursor is used in the form of an organic silicon compound or of a silicon salt or in the form of waterglass or pyrogenic silica.

6. A mesoporous silica as claimed in either of claims 1 or 2, which additionally contains at least one element selected from Al, B, Ge, elements of groups IIIa, IIb, IVb, Vb or VIb of the Periodic Table of Elements, Be, Sn, Pb, Bi, Cu, Fe, Co, Ni, Ce or Mn, pharmacologically active substances, enzymes, pigments or mixtures thereof.

7. The use of a mesoporous silica as claimed in either of claims 1 or 2 for the preparation of moldings, as a catalyst or as a carrier for catalysts or pharmacologically active substances, enzymes and pigments.

8. A molding coated with or consisting of a mesoporous silica as claimed in any of claims 1, 2 and 6.

9. A catalyst containing a mesoporous silica as claimed in any of claims 1, 2 and 6 as a carrier or active substance.

## Revendications

1. Silice mésoporeuse présentant une surface spécifique des mésopores d'au moins 1000 m²/g, un volume porique des mésopores d'au moins 1,0 ml/g et une distribution maximale de diamètre porique des mésopores d'au moins 8 nm.

2. Silice mésoporeuse selon la revendication 1, présentant un volume porique des mésopores d'au moins 1,5 ml/g.

3. Procédé de préparation de silice mésoporeuse par conversion de précurseurs du dioxyde de silicium dans un milieu réactionnel aqueux, **caractérisé en ce que** le milieu réactionnel contient une dispersion de polymérisation d'un polymère que l'on peut obtenir par polymérisation radicalaire.

4. Procédé selon la revendication 3, **caractérisé en ce que** la dispersion de polymérisation est cationique.

5. Procédé selon la revendication 3 ou 4, **caractérisé en ce que** le précurseur du dioxyde de silicium est mis en oeuvre sous forme d'un composé organique de silicium, d'un sel de silicium, sous la forme de verre soluble ou d'acide silicique pyrogène.

6. Silice mésoporeuse selon l'une des revendications 1 ou 2, **caractérisée en ce qu'**elle contient additionnellement encore au moins un élément choisi parmi Al, B, Ge, les éléments des groupes Illa, llb, IVb, Vb, Vlb du système périodique des éléments, Be, Sn, Pb, Bi, Cu, Fe, Co, Ni, Ce, Mn, des substances pharmacologiquement actives, des enzymes, des pigments, ou leurs mélanges.

7. Utilisation de silice mésoporeuse selon l'une des revendications 1 ou 2 pour la production de corps façonnés, en tant que catalyseur ou support de catalyseurs ou de substances pharmacologiquement actives, enzymes ou pigments.

8. Corps façonnés, enrobés ou constitués de silice mésoporeuse selon l'une des revendications 1, 2 ou 6.

9. Catalyseur contenant de la silice mésoporeuse selon l'une des revendications 1, 2 ou 6 en tant que support ou que substance active.
